# EUROPEAN PATENT APPLICATION

(11) **EP 3 572 276 A1**
(43) Date of publication of application: **27.11.2019**
(21) Application number: 18382352.5
(22) Date of filing: 23.05.2018
(51) Int. Cl.: B60P 3/06, B60D 1/00

(54) **BODY COUPLABLE TO A TRACTOR UNIT**

(71) Applicant: Casas Mugica, Jorge, 01196 Legarda (Álava) (ES)
(72) Inventor: Casas Mugica, Jorge, 01196 Legarda (Álava) (ES)
(74) Representative: Pons

(57) **Abstract**

The present invention relates to a body couplable to a tractor unit that enables the maximum permissible mass to be transported by said tractor unit to be increased, comprising coupling means for coupling to a tractor unit that are configured to restrict the rotation of the body with respect to the tractor unit and a rotation axle arranged behind a rear axle of the tractor unit once the body is coupled to said tractor unit.

## Description

### OBJECT OF THE INVENTION

The present invention relates to a body couplable to a tractor unit that enables the maximum permissible mass to be transported by said tractor unit to be increased, in addition to increasing the length of a final vehicle where the body is coupled or of a tractor unit and trailer body assembly of 16 m to 20.5 m, as well as being able to use the body for different services, such as vehicle carriers, isothermal box, tarpaulin, dump truck, winter service, tanker, etc.

The object of the invention is a body comprising coupling means for coupling to a tractor unit that are configured to restrict the rotation of the body with respect to the tractor unit and a rotation axle arranged behind a rear axle of the tractor unit once the body is coupled to said tractor unit.

### BACKGROUND OF THE INVENTION

Rigid vehicles comprising a tractor unit to which a trailer or semi-trailer is coupled are known in the state of the art.

Tractor units tend to incorporate a safety mechanism referred to as the fifth wheel, which is used to keep the trailer or semi-trailer coupled in an articulated manner to said tractor unit, leaving enough space between the trailer or semi-trailer and the tractor unit to facilitate the driving manoeuvres.

In 2-axle tractor units, the fifth wheel is placed just in front of the rear axle in order to couple the trailer or semi-trailer by means of a kingpin. Vehicles made up in this way support a maximum technically permissible laden mass (MTPLM) of up to 18 tm.

In 3-axle tractor units, the fifth wheel is placed in the centre of the four wheels of the two rear axles of the rear unit and parallel to the ground in order to couple the trailer or semi-trailer by means of a kingpin. Vehicles made up in this way support a maximum technically permissible laden mass (MTPLM) of up to 33 tm.

The body couplable to a tractor unit of the present invention provides a suspension and axle load capacity that is far greater than the technically permissible laden mass (TPLM) of the vehicles of the state of the art.

### DESCRIPTION OF THE INVENTION

The present invention relates to a body couplable to a tractor unit that enables the maximum permissible mass to be transported by said tractor unit to be increased.

The body comprises coupling means for coupling the body to the tractor unit, wherein said coupling means are configured to restrict the rotation of the body with respect to the tractor unit.

Preferably, these coupling means for coupling the body to the tractor unit comprise fastening bolts couplable in holes arranged in a cross bar couplable to the tractor unit.

The body further comprises a rotation axle that in turn comprises at least one wheel configured to roll on the ground, wherein said rotation axle is arranged behind a rear axle of the tractor unit once the body is coupled to said tractor unit.

Optionally, the body further comprises a rear hitch configured to carry out the coupling of a trailer or semi-trailer to said body.

Preferably, said rear hitch is configured to enable the rotation of said trailer or semi-trailer with respect to said body.

Optionally, the body comprises a lower platform and an upper platform, wherein the upper platform is preferably collapsible, such that when the body is in transport conditions without a load, the upper platform is retracted on the lower platform and when the body is in transport conditions with a load, the upper platform can be collapsed with respect to the lower platform depending on the load requirements.

Optionally, the body comprises a fifth wheel, fifth wheel being understood as a safety mechanism of the state of the art configured to keep a trailer or semi-trailer coupled in an articulated manner to said tractor unit, wherein the fifth wheel of the body of the present invention has a restricted rotation, such that it is configured as an additional coupling device that contributes to the fastening of the body to the tractor unit.

The body thus configured supports a very high suspension and axle maximum technically permissible laden mass (MTPLM), in addition to increasing the length of a final vehicle where the body is coupled or of a tractor unit and trailer body assembly of 16 m to 20.5 m, and a resulting increase of the volume to be transported, as well as being able to use the body for different services, such as vehicle carriers, isothermal box, tarpaulin, dump truck, winter service, tanker, etc.

### DESCRIPTION OF THE DRAWINGS

As a complement to the description being made, and for the purpose of helping to make the characteristics of the invention more readily understandable, in accordance with a preferred practical exemplary embodiment thereof, said description is accompanied by a set of drawings constituting an integral part thereof which, by way of illustration and not limitation, represent the following:

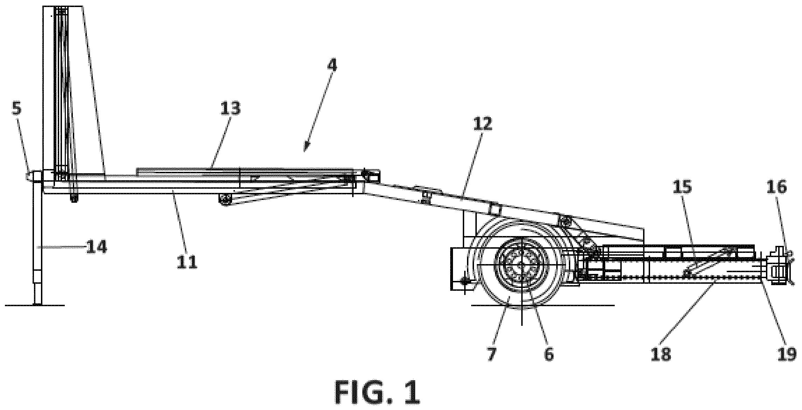

Figure 1 shows an elevation view of the body couplable to a tractor unit of the present invention.
Figure 2 shows an elevation view of the body of the present invention, for an embodiment wherein the body is a vehicle carrier body, coupled to said tractor unit.

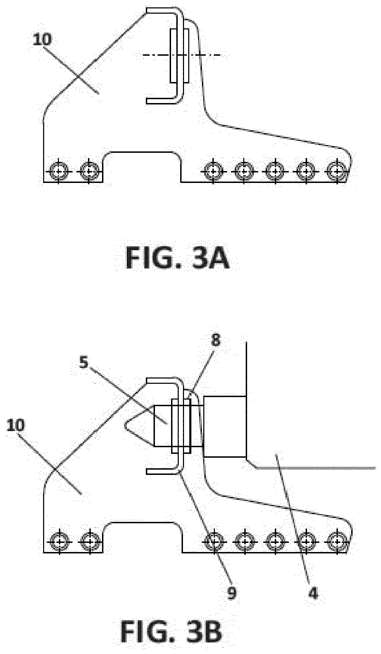

Figures 3A and 3B show an elevation view of one of the lateral plates couplable to the tractor unit for the insertion of the coupling means of the body, before and after having carried out said insertion respectively.

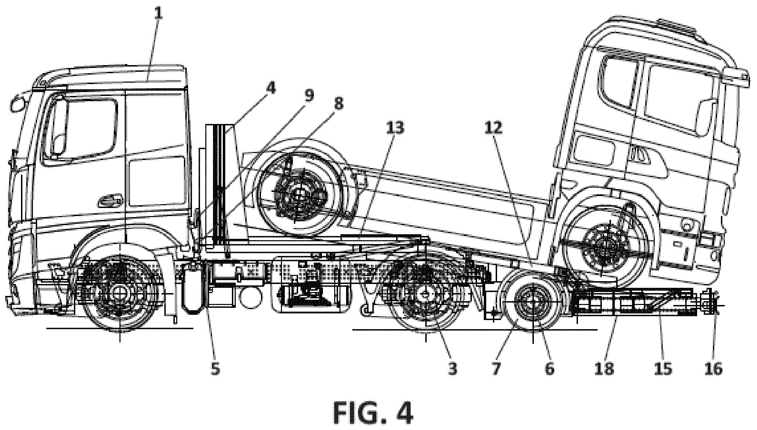

Figure 4 shows an elevation view of the body of the present invention coupled to said tractor unit and with another tractor unit being transported by said body.
Figure 5 shows an elevation view of the body of the present invention coupled to said tractor unit and with two minivans beings transported by said body wherein the upper platform is unfolded.

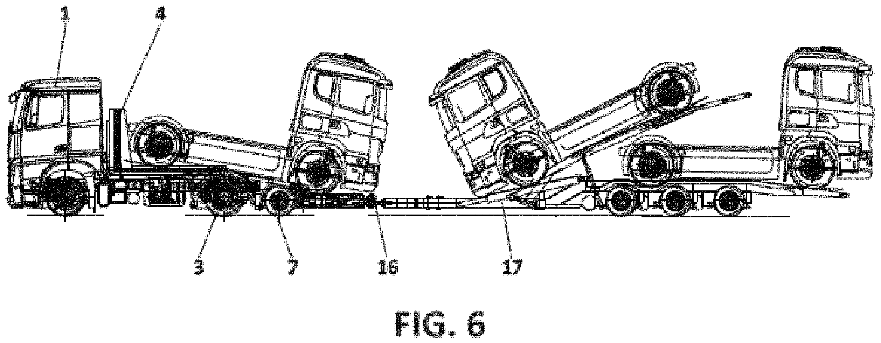

Figure 6 shows an elevation view of the body of the present invention coupled to the tractor unit and with a first tractor unit being transported by said body, and with a trailer coupled to the rear portion of the body, a trailer on which a second and a third tractor unit are arranged.

### PREFERRED EMBODIMENT OF THE INVENTION

The body couplable to a tractor unit of the present invention is described below in detail.

In order to describe the body in detail, a tractor unit (1) with at least two 2 axles of the state of the art comprising a fifth wheel for coupling a trailer or semi-trailer, a front rotation axle (2) and a rear rotation axle (3), bearing a load of up to 18 tm, the maximum permissible mass for the front rotation axle being 7.5 tm, and the maximum permissible mass for the rear rotation axle being 11.5 tm, shall be taken as a reference.

The body (4) of the present invention is couplable to said tractor unit (1) with at least two axles, wherein the body (4) comprises:
- coupling means (5) for coupling the body (4) to the tractor unit (1), wherein said coupling means (5) are configured to restrict the rotation of the body (4) with respect to the tractor unit (1), and
- a rotation axle (6) that in turn comprises at least one wheel (7) configured to roll on the ground, wherein said rotation axle (6) is arranged behind the rear rotation axle (3) of the tractor unit (1) once the body (4) is coupled to said tractor unit (1).

In this way, the body (4) coupled to the tractor unit (1) with at least 2 axles bearing a load of up to 21 tm, the maximum permissible mass for the front rotating axle (2) of the tractor unit (1) being 7.5 tm, the maximum permissible mass for the rear rotating axle (3) of the tractor unit (1) being 11.5 tm and the maximum permissible mass for the rotating axle (6) of the body (4) being 7.5 tm, significantly increasing the load capacity with respect to the same configuration of the tractor unit (1) with at least two axles of the state of the art.

The coupling means (5) for coupling the body (4) to the tractor unit (1) comprise fastening bolts couplable in holes (8) arranged in a cross bar (9) couplable to the tractor unit (1), wherein the cross bar (9) is in turn couplable to the tractor unit (1) by means of lateral plates (10) couplable to the tractor unit (1) in order to insert fastening bolts of the body in the holes (8) arranged in the cross bar (9), this joint being configured in this way to restrict the rotation of the body (4) with respect to the tractor unit (1).

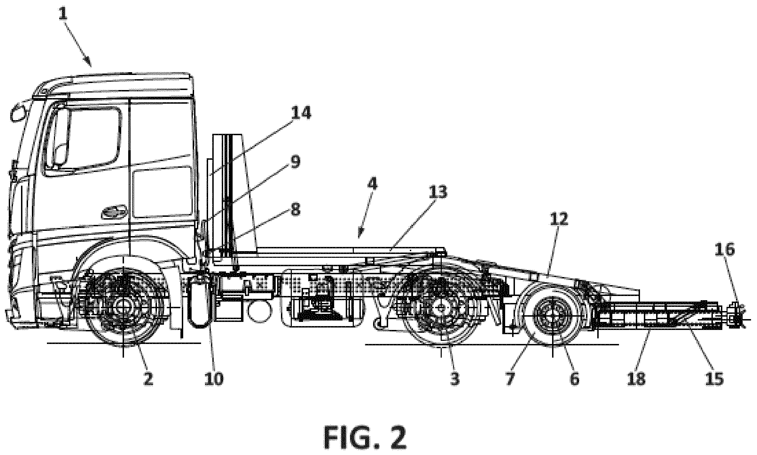

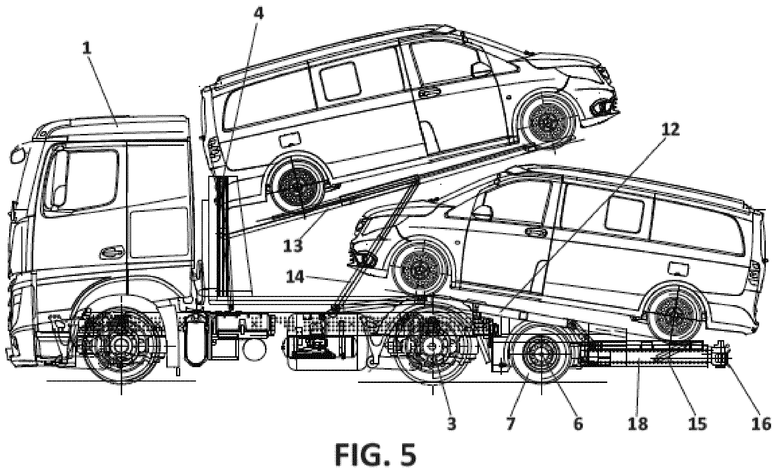

The body (4) comprises a chassis (11), and in the exemplary embodiment shown in Figure 2, applied to the case of a vehicle carrier body, a lower platform (12) and an upper platform (13), as shown in Figure 5, wherein the upper platform (13) is collapsible, such that when the body (4) is in transport conditions without a load, the upper platform (13) is retracted on the lower platform (12) and when the body (4) is in transport conditions with a load, the upper platform (13) can be collapsed with respect to the lower platform (12) depending on the load requirements. The body (4) further comprises first pneumatic or hydraulic cylinders (14) fastened at one end to the chassis (11) and at the other end to the upper platform (13) configured to carry out the collapsing/retracting of the upper platform (13) with respect to the lower platform (12).

In other exemplary embodiments, the body comprises a chassis (11) and support means for different elements depending on the load to be transported, whether it is an isothermal box, a tarpaulin, dump truck, winter service, tanker, etc

The body (4) comprises legs (14) configured to keep the body (4) in an essentially horizontal position when it is uncoupled from the tractor unit (1). In this essentially horizontal position, the body (4) can be in load conditions and ready to be coupled to the tractor unit (1).

The body (4) further comprises a ramp or rear section (18), a ramp or rear section (18) which in this exemplary embodiment is extendable in order to be adapted to the load requirements, for example to the different distances between axles of the vehicles to be transported, as can be seen in Figure 5. Optionally, the body (4) further comprises second pneumatic or hydraulic cylinders (15) fastened at one end to the chassis (11) and at the other end to the ramp or rear section (18), configured to carry out the extension or retraction of the ramp or rear section (18).

The body (4) further comprises a rear hitch (16) configured to carry out the coupling of a trailer or semi-trailer (17) to said body. Preferably, the rear hitch (16) is arranged at a rear end (19) of the ramp or rear section (18), wherein said rear hitch (16) is configured to enable the rotation of said trailer or semi-trailer (17) with respect to the body (4).

The body comprises a fifth wheel (not shown), fifth wheel being understood as a safety mechanism of the state of the art configured to keep a trailer or semi-trailer coupled in an articulated manner to said tractor unit (1), wherein the fifth wheel of the body of the present invention has a restricted rotation, such that it is configured as an additional coupling device that contributes to the fastening of the body (4) to the tractor unit (1).

## Claims

1. Body (4) couplable to a tractor unit (1) **characterised in that** the body (4) comprised:
- coupling means (5) for coupling the body (4) to the tractor unit (1), wherein said coupling means (5) are configured to restrict the rotation of the body (4) with respect to the tractor unit (1), and
- a rotation axle (6) that in turn comprises at least one wheel (7) configured to roll on the ground, wherein said rotation axle (6) is arranged behind the rear rotation axle (3) of the tractor unit (1) once the body (4) is coupled to said tractor unit (1).

2. Body (4) couplable to a tractor unit (1) according to claim 1, **characterised in that** the coupling means (5) for coupling the body (4) to the tractor unit (1) comprise fastening bolts couplable in holes (8) arranged in a cross bar (9) couplable to the tractor unit (1).

3. Body (4) couplable to a tractor unit (1) according to any of the preceding claims, **characterised in that** it further comprises a rear hitch (16) configured to carry out the coupling of a trailer or semi-trailer (17) to said body (4), wherein said rear hitch (16) is preferably configured to enable the rotation of said trailer or semi-trailer (17) with respect to the body (4).

4. Body (4) couplable to a tractor unit (1) according to claim 3, **characterised in that** the rear hitch (16) is configured to enable the rotation of said trailer or semi-trailer (17) with respect to the body (4).

5. Body (4) couplable to a tractor unit (1) according to any of the preceding claims, **characterised in that** it comprises a lower platform (12) and an upper platform (13), wherein the upper platform (13) is preferably collapsible with respect to the lower platform (12).

6. Body (4) couplable to a tractor unit (1) according to any of the preceding claims, **characterised in that** it comprises a chassis (11).

7. Body (4) couplable to a tractor unit (1) according to any of claims 5 and 6, **characterised in that** it comprises first pneumatic or hydraulic cylinders (14) fastened at one end to the chassis (11) and at the other end to the upper platform (13) configured to carry out the collapsing/retracting of the upper platform (13) with respect to the lower platform (12).

8. Body (4) couplable to a tractor unit (1) according to any of the preceding claims, **characterised in that** it comprises legs (14) configured to keep the body (4) in an essentially horizontal position when it is uncoupled from the tractor unit (1).

9. Body (4) couplable to a tractor unit (1) according to any of the preceding claims, **characterised in that** it comprises an extendable ramp or rear section (18).

10. Body (4) couplable to a tractor unit (1) according to claims 6 and 9, **characterised in that** it comprises second pneumatic or hydraulic cylinders (15) fastened at one end to the chassis (11) and at the other end to the ramp or rear section (18), configured to carry out the extension or retraction of the ramp or rear section (18).

11. Body (4) couplable to a tractor unit (1) according to claims 3 and 9, **characterised in that** the rear hitch (16) is arranged at a rear end (19) of the ramp or rear section (18).

12. Body (4) couplable to a tractor unit (1) according to any of the preceding claims, **characterised in that** it comprises a fifth wheel that has a restricted rotation, such that it is configured as an additional coupling device that contributes to the fastening of the body (4) to the tractor unit (1).

13. Vehicle comprising the body (4) of any of the preceding claims and a tractor unit (1).

14. Vehicle according to claim 13, **characterised in that** the tractor unit (1) comprises a cross bar (9) and lateral plates (10) couplable to the tractor unit (1) in order to couple the cross bar (9) to the tractor unit (1), wherein the cross bar comprises holes (8) configured for the insertion of coupling means (5) for coupling the body (4), preferably fastening bolts, and the restriction of the rotation of the body (4) with respect to the tractor unit (1).

15. Vehicle according to any of claims 13 to 14, **characterised in that** it further comprises a trailer or semi-trailer (17) couplable to the body (4), preferably to a rear hitch (16) of the body (4), wherein said rear hitch (16) is preferably configured to enable the rotation of said trailer or semi-trailer (17) with respect to the body (4).
